# EUROPEAN PATENT APPLICATION

(11) **EP 4 779 653 A1**
(43) Date of publication of application: **22.07.2026**
(21) Application number: 25275002.1
(22) Date of filing: 15.01.2025
(51) Int. Cl.: G21C 11/06, G21C 15/10, G21C 15/02

(54) **REACTOR SYSTEM**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A nuclear reactor system (100) comprising a nuclear reactor unit (200) having a reactor core (202) with a central axis (206) extending along the length of the reactor core (202). The reactor core (202) defines a radially outer perimeter (204) and extends radially outwards from the central axis (206) to the radially outer perimeter (204). There is also provided a reflector body (300) provided around the radially outer perimeter (204) of the reactor core (202), the reflector body (300) extending radially outwards from the reactor core (202) outer perimeter (204) to a reflector body wall (302). A fluid flow duct (304) is defined between by the reflector body (300) and the reflector body wall (302). A reactor pressure vessel wall (400) is provided radially outward of, and spaced apart from the reflector body wall (302), with a closed cavity (402) defined between the reactor pressure vessel wall (400) and reflector body wall (302). A shield wall (500) is provided radially outward of, and spaced apart from, the reactor pressure vessel wall (400), with a fluid reservoir (600) being defined by the reactor pressure vessel wall (400) and shield wall (500).

## Description

### FIELD

The present disclosure relates to a nuclear reactor system.

### BACKGROUND

Controlling the operating temperature of components of a nuclear reactor system is essential for its longevity and overall safe running. Heat loss to the immediate environment around its core unit may be high. Hence any equipment in the immediate vicinity of the core unit must be configured, or at least shielded, so that its temperature is maintained at its optimal (or at least acceptable) operating temperature. In some cases, it may be that some equipment necessary for the running of the system is provided in a separate room (for example if the reactor system is housed in a building) or a separate compartment (for example if the reactor system is housed in a vessel) to keep its operating temperature at an acceptable level, which adds to the size, cost and complexity of the reactor system as a whole.

Additionally it is common for nuclear reactor systems to be designed with shielding systems which are deployed to limit the amount of radiation and heat escaping from the reactor core. The shielding systems must be maintained and their operability and operation closely monitored as their failure may have catastrophic consequences.

Hence a nuclear reactor system which is configured to reject less radiation and heat to the environment around it, and which comprises a failsafe shielding system, is highly desirable.

### SUMMARY

According to the present disclosure there is provided an apparatus and system as set forth in the appended claims. Other features of the invention will be apparent from the dependent claims, and the description which follows.

Accordingly there may be provided a nuclear reactor system (100) comprising a nuclear reactor unit (200) having a reactor core (202) with a central axis (206) extending along the length of the reactor core (202). The reactor core (202) may define a radially outer perimeter (204), the reactor core (202) extending radially outwards from the central axis (206) to the radially outer perimeter (204).

The nuclear reactor system (100) may further comprise a reflector body (300) provided around the radially outer perimeter (204) of the reactor core (202), the reflector body (300) extending radially outwards from the reactor core (202) outer perimeter (204) to a reflector body wall (302).

The nuclear reactor system (100) may further comprise a fluid flow duct (304) defined between by the reflector body (300) and the reflector body wall (302).

The nuclear reactor system (100) may further comprise a reactor pressure vessel wall (400) provided radially outward of, and spaced apart from the reflector body wall (302), with a closed cavity (402) defined between the reactor pressure vessel wall (400) and reflector body wall (302).

The nuclear reactor system (100) may further comprise a shield wall (500) provided radially outward of, and spaced apart from, the reactor pressure vessel wall (400), with a fluid reservoir (600) being defined by the reactor pressure vessel wall (400) and shield wall (500).

The shield wall (500) may be joined to the reactor pressure wall (400) to form the fluid reservoir (600).

A plurality of fluid flow ducts (304) may be provided between the reflector body (300) and the reflector body wall (302), spaced apart around an outer edge portion of the reflector body (300) by divider walls (320). The divider walls (320) may extend to the reflector body wall (302).

The divider walls (320) may reduce in thickness as the radial distance from the central axis (206) increases.

A fluid (602) may be provided in the fluid reservoir (600) to provide a heat rejection path between the reactor pressure vessel wall (400) and the shield wall (500).

The fluid (602) provided in the fluid reservoir (600) may be in heat flow communication with a heat sink (700).

The closed cavity (402) may be a stagnant gas reservoir (410) to provide heat insulation between the reflector body wall (302) and reactor pressure vessel wall (400).

Spacers (312) may extend between the reflector body wall (302) and reactor pressure vessel wall (400) to space apart the reflector body wall (302) and reactor pressure vessel wall (400) to define the closed cavity (402).

The spacers (312) may be provided as ribs (316) which extend between the reflector body wall (302) and reactor pressure vessel wall (400) to define edges (314) of the closed cavity (402).

The ribs (316) may extend along the length (L) of the reflector body (300) parallel to the central axis (206), spaced apart from one another around the circumference of the reflector body wall (302), a plurality of closed cavities (402) defined between the ribs (316).

Additionally or alternatively the ribs (316) may extend around the circumference of the reflector body wall (302) spaced apart from one another along the length (L) of the reflector body (300), a plurality of closed cavities (402) defined between the ribs (316).

The reflector body (300), divider walls (320), reflector body wall (302) and spacers (312) may be formed substantially of graphite.

The reflector body wall (302) may be formed integrally with the divider walls (320) and reflector body (300).

The reactor pressure vessel wall (400) may be formed substantially of a metal or a metallic alloy.

The shield wall (500) may be formed substantially of a metal or a metallic alloy.

The reactor core (202), reflector body (300), reactor pressure vessel wall (400) and shield wall (500) may be concentric.

Hence there is provided a nuclear reactor system which is configured to reject less radiation and heat to the environment around it since the fluid reservoir is integral to the reactor system design, and hence present and operational during all operational states of the reactor system. This therefore provides a failsafe shielding system since the fluid reservoir is present at all times, even in the event of a system shutdown.

### BRIEF DESCRIPTION OF THE FIGURES

Embodiments of the invention will now be described by way of example only with reference to the figures, in which:
Figure 1 shows a side sectional view of the system of the present disclosure; and
Figure 2 shows a sectional view along line A-A illustrated in figure 1.

### DETAILED DESCRIPTION

The present disclosure relates to a nuclear reactor system 100, which may be a nuclear fission reactor system. The nuclear reactor system 100 may form part of a high temperature gas cooled reactor (HTGR) system. The system may be a direct cycle design with a reactor core 202 which directly heats a working fluid driving a turbine to generate power. Features of such systems are well known in the art and hence are not further described in this disclosure.

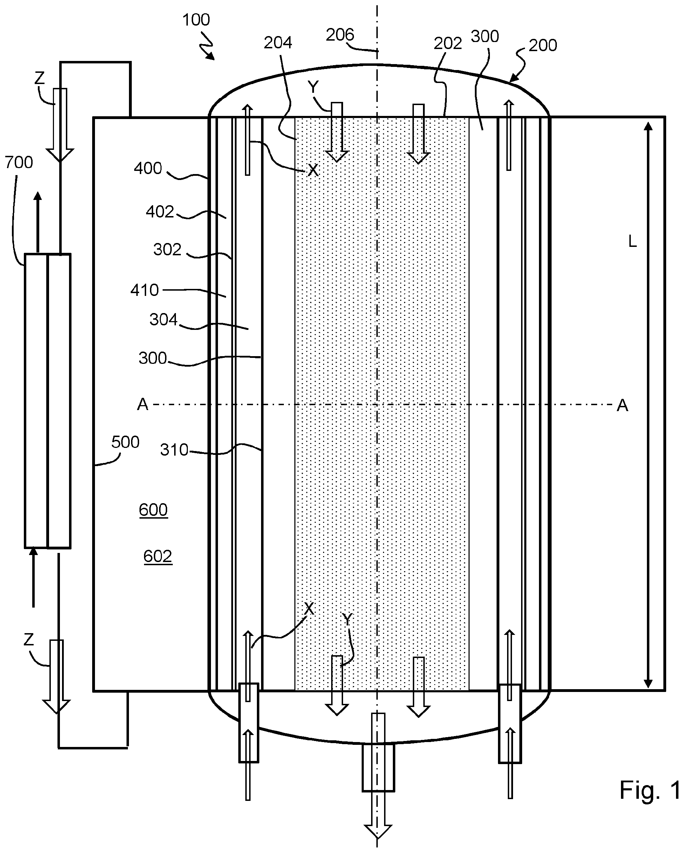

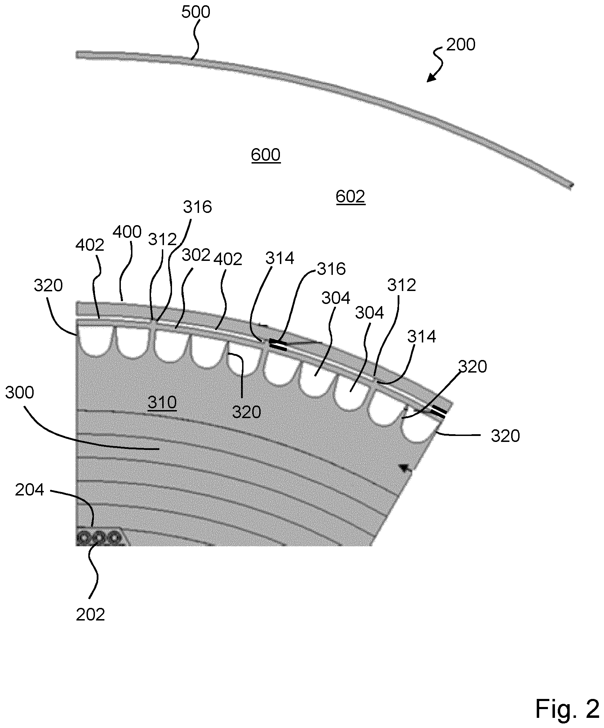

As shown in figure 1, the nuclear reactor system 100 comprises a nuclear reactor unit 200 having a reactor core 202 with a central axis 206 extending along a length "L" of the reactor core 202. That is to say, the nuclear reactor system 100 comprises a nuclear reactor unit 200 having a central axis 206 extending along a length "L" of the nuclear reactor unit 200. The length "L" may be parallel to the direction of the central axis 206. The reactor core 202, defines a radially outer perimeter 204. As shown in figure 2, the reactor core 202 extends radially outwards from the central axis 206 to the radially outer perimeter 204.

As shown in figures 1, 2 the nuclear reactor system 100 further comprises a reflector body 300 provided around the radially outer perimeter 204 of the reactor core 202. The reflector body 300 extends radially outwards from the reactor core 202 outer perimeter 204 to a reflector body wall 302.

A fluid flow duct 304 is defined between by the reflector body 300 and the reflector body wall 302. As shown in the example of figure 2, a plurality of fluid flow ducts 304 may be provided between the reflector body 300 and the reflector body wall 302, spaced apart from one another around the outer edge of the reflector body 300 by divider walls 320 which extend to the reflector body wall 302. That is to say, the reflector body 300 may define a plurality of divider walls 320 that extend radially outwards from a main portion 310 of the reflector body 300 to the reflector body wall 302, the divider walls 320 being spaced apart from one another around the main portion 310 of the reflector body 300 to form the plurality of fluid flow ducts 304.

As shown in figure 2, and by way of non-limiting example, the divider walls 320 may reduce in thickness as the radial distance from the central axis 206 increases such that the fluid flow ducts 304 each have a "U" cross-sectional shape along their length. In another example the divider walls 320 may have a uniform thickness. In a further example (not shown), the divider walls 320 may have a concave shape such that the fluid flow ducts 304 each have a circular, oval or tear drop cross-sectional shape along their length. In further examples (not shown) the dividing wall 320 may be formed such that the fluid flow ducts 304 have any suitable cross-sectional shape along their length. The cross-sectional shape of the fluid flow ducts 304 may differ around the edge of the reflector body 300. That is to say, not all of the fluid flow ducts 304 may have the same cross-sectional shape as the other fluid flow ducts 304.

The reflector body wall 302 may be formed integrally with the divider walls 320 and reflector body 300. That is to say the reflector body wall 302, the divider walls 320 and the reflector body 300 may be formed from the same piece of material.

A reactor pressure vessel wall 400 may be provided radially outward of, and spaced apart from the reflector body wall 302, with a closed cavity 402 defined between the reactor pressure vessel wall 400 and reflector body wall 302. That is to say, the reactor pressure vessel wall 400 may be provided radially outward of, and spaced apart from the reflector body wall 302 to define a cavity 402 between the reactor pressure vessel wall 400 and reflector body wall 302, the cavity 402 being sealed (i.e. sealed around its edges) to provide a closed volume. The cavity/volume is filled with a fluid, for example a gas. The gas may be air. Since the cavity/volume 402 is closed, the fluid in the cavity/volume 402 is stagnant. That is to say, since the cavity/volume 402 is closed the fluid in the cavity/volume 402 is still (i.e. not flowing). Put another way, the closed cavity 402 may be a stagnant gas reservoir 410 to provide heat insulation between the reflector body wall 302 and the reactor pressure vessel wall 400.

As shown in figure 2, spacers 312 may extend between the reflector body wall 302 and reactor pressure vessel wall 400 to space apart the reflector body wall 302 and reactor pressure vessel wall 400.

The spacers 312 may be provided as discrete lands spaced apart from one another around the reflector body wall 302 of the reflector block 300 and/or the reactor pressure wall 400 inner surface.

As shown in figure 2, the spacers 312 may be provided as ribs 316 which extend between the reflector body wall 302 and the reactor pressure vessel wall 400 to define edges 314 of the closed cavity 402.

The ribs 316 may extend along the length L of the reflector body 300 parallel to the central axis 206, spaced apart from one another around the main portion 310 of the reflector body 300 to define the plurality of closed cavities 402 between the ribs 316.

The ribs 316 may extend along the length L of the reflector body 300 parallel to the central axis 206, spaced apart from one another around the outer circumference of the reflector body wall 302 (and hence the inner circumference of the reactor pressure vessel wall 400) to define the plurality of closed cavities 402 between the ribs 316.

Additionally or alternatively the ribs 316 may extend around the main portion 310 of the reflector body 300 spaced apart from one another along the length L of the reflector body 300 (i.e. spaced apart from one another in a direction parallel to the direction of the central axis 206) to define the plurality of closed cavities 402 between the ribs 316.

Additionally or alternatively the ribs 316 may extend around the outer circumference of the reflector body wall 302 (and hence the inner circumference of the reactor pressure vessel wall 400) spaced apart from one another along the length (L) of the reflector body 300 (i.e. spaced apart from one another in a direction parallel to the direction of the central axis 206) to define the plurality of closed cavities 402 between the ribs 316.

In another example (not shown) the ribs 316 may extend around the main portion 310 of the reflector body 300 in any suitable pattern to define the plurality of closed cavities 402 between the ribs 316.

That is to say, the ribs 316 may extend around the outer circumference of the reflector body wall 302 (and hence the inner circumference of the reactor pressure vessel wall 400) in any suitable pattern to define the plurality of closed cavities 402 between the ribs 316.

The spacers 312 may define a small contact area between the reflector body wall 302 and the reactor pressure vessel wall 400 to thereby minimise the heat conduction path between them.

The reflector body 300, divider walls 320, reflector body wall 302 and spacers 312 may be formed substantially of graphite.

The fluid flow ducts 304 may define the delivery path for a working fluid delivered to the reactor core 202. For example the working fluid may pass along the fluid flow ducts 304 (e.g. in the direction illustrated by arrows X in figure 1) before being passed through the reactor core 202 (e.g. in the direction illustrated by arrows Y in figure 1), before being transported out of the reactor pressure vessel 400 so heat in the working fluid can be used, for example to create steam for driving a turbine, in the conventional way that high-temperature gas reactors may be configured.

As shown in the figures, a shield wall 500 may be provided radially outward of, and spaced apart from, the reactor pressure vessel wall 400, with a fluid reservoir 600 being defined by the reactor pressure vessel wall 400 and shield wall 500.

The shield wall 500 may be joined to the reactor pressure wall 400 to form the fluid reservoir 600. That is to say, the shield wall 500 may be formed integrally with the reactor pressure wall 400. Put another way, the shield wall 500 may be formed integrally with (e.g. directly extends from, or joined by further walls to) the reactor pressure wall 400. That is to say, the shield wall 500 may be coupled/linked with the reactor pressure wall 400 such that the fluid reservoir 600 is an integral part of the nuclear reactor unit 200, and such that the fluid reservoir 600 bounds/surrounds the reactor pressure wall 400.

The reactor pressure vessel wall 400 may be formed substantially of a metal or a metallic alloy (e.g. steel). The shield wall 500 may be formed substantially of a metal or a metallic alloy (e.g. steel).

The reactor core 202, reflector body 300, reactor pressure vessel wall 400 and shield wall 500 may be concentric. That is to say, the reactor core 202, reflector body 300, reactor pressure vessel wall 400 and shield wall 500 may be centred on the central axis 206.

A fluid 602 may be provided in the fluid reservoir 600. For example the fluid may be water (e.g. "light water"). The fluid may comprise water and boric acid, the boric acid provided to minimise secondary gamma emissions from neutron absorption by hydrogen. The fluid 602 in the fluid reservoir 600 may provide a heat rejection path between the reactor pressure vessel wall 400 and the shield wall 500.

The fluid reservoir 600 may be a sealed, or sealable, tank. That is to say the fluid reservoir 600 may be a closed unit, with no fluid flowing into or out of the fluid reservoir 600. In some examples, the fluid reservoir may be configured such that the fluid contained therein is stagnant/non-flowing.

As illustrated in figure 1, the fluid 602 provided in the fluid reservoir 600 may be in heat flow communication with a heatsink 700. In some examples the heatsink 700 may be provided in heat conductive communication with the fluid 602 to control the temperature of the fluid 602 to within a desired range. Hence, in such an example, there may be some flow within the fluid reservoir 600 as the fluid 602 is cycled around to remove heat to the heatsink 700, for example with fluid 602 moving through the heatsink 700 (e.g. a heat exchanger) in the direction illustrated by arrows labelled "Z" in figure 1. However, even in this example, none of the fluid 602 leaves the reservoir system, and no additional fluid 602 enters the reservoir system.

Alternatively or additionally (and not shown) the shield wall 500 may be in heat conductive communication with a heat exchanger which extracts heat from the fluid 602 in the fluid reservoir 600.

Thus the fluid reservoir 600 formed by the reactor pressure vessel wall 400 and the shield wall 500 provides a radiation absorption shield. The fluid in the closed cavity 402 defined between the reactor pressure vessel wall 400 and reflector body wall 302 provides a heat insulator layer to reduce the amount of heat conducted from the reflector body 300 to the fluid 600 in the fluid reservoir 602.

Hence there is provided a nuclear reactor system which comprises an integral shielding system, provided by the reservoir 600 defined by the reactor pressure wall 400 and the shield wall 500.

The thermal design of the system is accomplished, at least in part, through optimisation of the structural and thermal load path interface between the reflector body 300 and the reactor pressure vessel wall 400.

The improved thermal design reduces the reflector body 300 mean temperature, increasing the thermal inertia within the reactor core 202. This enables the operating temperature of the reactor pressure vessel wall 400 to be maintained within material design limits for structural steels. Hence a robust material such as steel may be used for the reactor pressure vessel wall 400, which is clearly advantageous from a material sourcing point of view.

The combination of the closed cavity 402 and the reservoir 600 provides heat insulation, meaning that the shield tank wall 500 may be maintained at a low temperature, for example 100 deg C, which is lower than examples of the related art.

Hence as the shield tank wall 500 may be relatively cool, it is possible to store other equipment necessary for the running of the system close to, i.e. in the same room or compartment as, the assembly of the reactor core 202, reflector body 300, reactor pressure vessel wall 400 and shield wall 500 (i.e. the nuclear reactor unit 200) without the need for excessive insulation and cooling systems in order to ensure their prolonged and successful operation. That is to say, the configuration of the system of the present disclosure provides a primary engineered decay heat removal path which maintains a reactor compartment at a cool temperature.

Since the reservoir 600 is filled with a fluid during normal operation of the reactor, there is provided a passive shielding system that is present at all times.

With the present configuration, even if the cooling system for the reservoir 700 is lost (for example the water boils off) there are fewer thermal resistances between the outside environment and the outer shield wall, so the metal temperatures will remain within design limits.

Hence the shielding of the system of the present disclosure is integral with the cooling system, which enables a very compact design to be achieved. This is desirable in all applications, but in particular is useful in water vessels.

Hence, in a fault condition, heat radiated across the reservoir 600 may raise the external temperature of the shield wall 500 above normal operating temperatures, but they will still be maintained below operating temperatures of the material of the shield wall 500. For example, with the arrangement of the present disclosure, it is anticipated that in the event of fluid from the reservoir 600 being lost, then the shield tank wall 500 may be maintained at about 560 deg C, which is well within the operating limits of material such as steels which may be used to make the shield tank wall 500. That is to say, the system of the present disclosure enables a wide range of materials to be used in the construction of the system, as well as simplifying its structural design as it will undergo reduced thermal expansion and reduced thermal induced fatigue cycles relative to examples of the related art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A nuclear reactor system comprising :
a nuclear reactor unit having a reactor core with a central axis extending along the length of the reactor core, wherein the reactor core defines a radially outer perimeter, the reactor core extending radially outwards from the central axis to the radially outer perimeter;
a reflector body provided around the radially outer perimeter of the reactor core, the reflector body extending radially outwards from the reactor core outer perimeter to a reflector body wall;
a fluid flow duct defined between by the reflector body and the reflector body wall;
a reactor pressure vessel wall provided radially outward of, and spaced apart from the reflector body wall, with a closed cavity defined between the reactor pressure vessel wall and reflector body wall; and
a shield wall provided radially outward of, and spaced apart from, the reactor pressure vessel wall, with a fluid reservoir being defined by the reactor pressure vessel wall and shield wall.

2. A nuclear reactor system as claimed in claim 1 wherein the shield wall is joined to the reactor pressure wall to form the fluid reservoir.

3. A nuclear reactor system as claimed in claim 1 or claim 2 wherein a plurality of fluid flow ducts are provided between the reflector body and the reflector body wall, spaced apart around an outer edge portion of the reflector body by divider walls which extend to the reflector body wall.

4. A nuclear reactor system as claimed in claim 3 wherein the divider walls reduce in thickness as the radial distance from the central axis increases.

5. A nuclear reactor system as claimed in any one of the preceding claims wherein a fluid is provided in the fluid reservoir to provide a heat rejection path between the reactor pressure vessel wall and the shield wall.

6. A nuclear reactor system as claimed in claim 5 wherein the fluid provided in the fluid reservoir is in heat flow communication with a heat sink.

7. A nuclear reactor system as claimed in any one of the preceding claims wherein the closed cavity is a stagnant gas reservoir to provide heat insulation between the reflector body wall and reactor pressure vessel wall.

8. A nuclear reactor system as claimed in any one of the preceding claims wherein spacers extend between the reflector body wall and reactor pressure vessel wall to space apart the reflector body wall and reactor pressure vessel wall to define the closed cavity.

9. A nuclear reactor system as claimed in claim 8 wherein the spacers are provided as ribs which extend between the reflector body wall and reactor pressure vessel wall to define edges of the closed cavity.

10. A nuclear reactor system as claimed in claim 9 wherein the ribs extend along the length (L) of the reflector body parallel to the central axis, spaced apart from one another around the circumference of the reflector body wall, and/or the ribs extend around the circumference of the reflector body wall spaced apart from one another along the length (L) of the reflector body, a plurality of closed cavities defined between the ribs.

11. A nuclear reactor system as claimed in any one of claims 8 to 10 wherein the reflector body, divider walls, reflector body wall and spacers are formed substantially of graphite.

12. A nuclear reactor system as claimed in any one of claims 3 to 11 wherein the reflector body wall is formed integrally with the divider walls and reflector body.

13. A nuclear reactor system as claimed in any one of the preceding claims wherein the reactor pressure vessel wall is formed substantially of a metal or a metallic alloy.

14. A nuclear reactor system as claimed in any one of the preceding claims wherein the shield wall is formed substantially of a metal or a metallic alloy.

15. A nuclear reactor system as claimed in any one of the preceding claims wherein the reactor core, reflector body, reactor pressure vessel wall and shield wall are concentric.
